Europäisches Patentamt

European Patent Office

Office européen des brevets

(11) Veröffentlichungsnummer: **0 036 624**
**B1**

(12) **EUROPÄISCHE PATENTSCHRIFT**

(45) Veröffentlichungstag der Patentschrift:
**14.08.85**

(21) Anmeldenummer: **81102002.3**

(22) Anmeldetag: **18.03.81**

(51) Int. Cl.⁴: **C 08 F 14/06, C 08 F 2/18**

(54) Verwendung von Mischestern als Dispergierhilfsmittel für die Polymerisation von Vinylchlorid.

(30) Priorität: **26.03.80 DE 3011645**

(43) Veröffentlichungstag der Anmeldung:
**30.09.81 Patentblatt 81/39**

(45) Bekanntmachung des Hinweises auf die Patenterteilung:
**14.08.85 Patentblatt 85/33**

(84) Benannte Vertragsstaaten:
**AT BE CH DE FR GB IT LI LU NL SE**

(56) Entgegenhaltungen:
**DE - A - 833 856**
**DE - A - 878 863**
**DE - A - 1 098 716**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Höfer, Rainer, Dr., Klever Strasse 31, D-4000 Düsseldorf 30 (DE)**
Erfinder: **Erwied, Werner, Dr., Senliser Strasse 22, D-4018 Langenfeld (DE)**
Erfinder: **Wegemund, Bernd, Dr., Händelweg 3, D-5576 Haan (DE)**
Erfinder: **Eckelt, Michael, Pannebäckerstrasse 18, D-4000 Düsseldorf (DE)**

ACTORUM AG

## Beschreibung

Vinylchlorid kann industriell nach den bekannten Verfahren der Masse-, Lösungs-, Emulsions- und Suspensionspolymerisation hergestellt werden. Unter diesen Verfahren zeichnet sich die Polymerisation in Suspension durch verschiedene Vorteile aus:

Niedrige Verarbeitungskosten, gute Prozesskontrolle sowie gute optische Eigenschaften, hohe chemische Beständigkeit und geringer Fremdstoffgehalt des Polymerisats. Die einfach durchzuführende Isolierung durch Filtrieren oder Zentrifugieren liefert ein freifliessendes Pulver.

Zur einschlägigen Literatur vergleiche beispielsweise Encyclopedia of PVC, Band I, Seiten 76–85, Ed. L.I. Nass, Marcel Dekker, New York, Basel (1976) oder Developments in PVC Production and Processing –1, Seiten 13–42, Ed. A. Whelan und J.L. Craft, Applied Science Publishers Ltd., London (1977).

Zur Suspensionspolymerisation wird das unter Druck bei Raumtemperatur flüssige, wasserunlösliche, monomere Vinylchlorid in der ein- bis vierfachen Volumenmenge gereinigtem Wasser durch intensives Rühren zu kleinen Tropfen verteilt und in dieser Form zu kleinen Polymerperlen auspolymerisiert. Unerlässlich zur Bildung stabiler Suspensionen ist der Zusatz eines Suspensionsmittels, eines Schutzkolloids oder eines anderen oberflächenaktiven Mittels zum Wasser/Monomer-Gemisch. Ursprünglich verwendete man zur Stabilisierung der Monomertröpfchen anorganische Feststoffe (Talkum, Hydrargillit, Magnesiumhydroxyd, Calciumphosphat), die sich an der Grenzfläche Monomer/Wasser ansammeln und so ein Zusammenbacken der Vinylchloridperlen verhindern. Heute werden zu diesem Zweck meist hydrophile Makromoleküle eingesetzt, z.B. Polyvinylalkohole, Cellulosederivate, Copolymere von Maleinsäure bzw. deren Anhydrid oder Imid mit Styrol, Vinylacetat, Vinyläthern oder Ethylen, hydrolisierte Vinylacetat-Styrol-Copolymere, Polyvinylpyrrolidon und Copolymere, Gelatine, Stärke, Alginate, polymere Phosphate und Kombinationen dieser Substanzgruppen.

Die Auswahl und Zusammensetzung des Suspensionsmittelsystems hat einen ausschlaggebenden Einfluss auf die Qualität des PVC-Rohproduktes. Insbesondere werden während der Polymerisation bereits folgende anwendungstechnisch wichtigen Parameter vorbestimmt:

Schüttgewicht, Korngrösse, Korngrössenverteilung, Weichmacheraufnahme, Weichmacheraufnahme-Geschwindigkeit, optische Eigenschaften, elektrische Eigenschaften, Wärmebeständigkeit. Gleichzeitig sollen nach Möglichkeit schon durch die Auswahl des Suspensionsmittelsystems Inhomogenitäten im Korn (die sich nach dem Plastifizieren als Stippen oder Fischaugen bemerkbar machen) und Wandablagerungen im Polymerisationsreaktor ausgeschlossen werden.

Die Zugabe von Emulgatoren bei der Suspensionspolymerisation dient der Einflussnahme auf die Morphologie des PVC-Korns, die letztlich bestimmend ist für das Schüttgewicht und die Weichmacheraufnahmefähigkeit. Beide Grössen, obwohl Antagonisten, sollen möglichst hoch sein, das Schüttgewicht aus wirtschaftlichen, die Weichmacheraufnahme aus verarbeitungstechnischen Gründen. Optimale Eigenschaften sind nur zu erwarten, wenn im Polymerisationsprozess eine definierte, enge Korngrössenverteilung erreicht wird, wozu der Emulgator ebenfalls beitragen soll.

Als Hilfsdispergatoren in diesem Sinne ist zur Verbesserung von Einzeleffekten bereits eine Reihe oberflächenaktiver Verbindungen untersucht worden. Z.B. beschreibt die US-PS 2 528 469 den Zusatz von Dioctylsulfosuccinat, die GB-PS 755 796 empfiehlt u.a. den Zusatz von Fettsäuremonoglycerid-Äthylenoxid-Kondensationsprodukten, die DE-AS 1 076 374 den Einsatz von Estern aus einem aliphatischen mehrwertigen Alkohol und einer ungesättigten Oxyfettsäure, die DE-AS 1 105 616 die Verwendung von Triglycerinmonostearat.

Die vorliegende Erfindung hat sich die Aufgabe gestellt, eine Gruppe von Emulgatoren für die Suspensionspolymerisation von Vinylchlorid zu verwenden, die in Kombination mit einem herkömmlichen Schutzkolloid als Dispergierhilfsmittel wirken und dem PVC insbesondere eine enge Korngrössenverteilung, eine hohe Porosität und damit verbunden eine hohe Weichmacheraufnahme bei gleichzeitig hohem Schüttgewicht verleihen. Es wurde gefunden, dass bestimmte, im folgenden definierte Mischester zur Lösung der erfindungsgemässen Aufgabe geeignet sind.

Gegenstand der Erfindung ist dementsprechend die Verwendung von Mischestern aus (A) Hydroxycarbonsäuren mit bis zu 6 C-Atomen und

a) Partialestern aus (B) gesättigten oder olefinisch ungesättigten Monocarbonsäuren mit 10 bis 24 C-Atomen, die auch mit einer Hydroxylgruppe substituiert sein können, und (C) Polyolen mit 3 bis 6 C-Atomen und wenigstens 3 OH-Gruppen oder

b) Estern aus (B) gesättigten oder olefinisch ungesättigten Monocarbonsäuren mit 10 bis 24 C-Atomen, die auch mit einer Hydroxylgruppe substituiert sein können, mit (A) Hydroxycarbonsäuren mit bis zu 6 C-Atomen und – soweit diese Mischester freie Carboxylgruppen aufweisen – gegebenenfalls deren wasserlöslichen Salzen als Dispergierhilfsmittel für die Polymerisation von Vinylchlorid.

Die erfindungsgemäss verwendeten Mischester können als anionische oder nichtionische Komplexester zum Einsatz kommen, wobei die anionische Form in der Regel durch die Gegenwart nicht veresterter Carboxylgruppen gekennzeichnet ist.

Erfindungsgemäss werden damit zwei Klassen von Misch- bzw. Komplexestern vorgeschlagen, die gewünschtenfalls auch in Kombination miteinander oder in Kombination mit anderen Dispergierhilfsmitteln eingesetzt werden können. Gemeinsam gilt für diese beiden Klassen, dass sie in der Regel aus 3 Grundkomponenten aufgebaut sind. In beiden Fällen liegen als erste Grundkomponente des Mischesters Hydroxycarbonsäuren mit bis zu 6 Kohlenstoffatomen vor. Diese Hydroxycarbonsäuren können eine oder mehrere Carboxylgruppen aufweisen, wobei vorzugsweise 1 bis 3 Carboxylgruppen vorliegen. Entsprechend gilt für die Hydroxylgruppen, dass auch hier eine oder mehrere Hydroxylgruppen anwesend sein können, wobei hier ebenfalls 1 bis 3 Hydroxylgruppen, insbesondere 1 oder 2 Hydroxylgruppen, bevorzugt sein können. Geeignete Hydroxycarbonsäuren enthalten 3 bis 6 C-Atome. Besondere Bedeutung besitzen im Rahmen der Erfindung die folgenden Hydroxycarbonsäuren:

Milchsäure, Tartronsäure (Hydroxymalonsäure), Glycerincarbonsäure, Weinsäure, Äpfelsäure und insbesondere die Zitronensäure.

Im folgenden wird der Einfachheit halber diese Hydroxycarbonsäurekomponente mit A bezeichnet. Sie liegt – je nach der bestimmten Struktur des Komplex- bzw. Mischesters – über eine Carbonsäuregruppe oder über eine Hydroxylgruppe in den Mischester eingebunden vor.

In der zuvor geschilderten Ausführungsform gemäss (a) ist die Hydroxycarbonsäure (A) über ihre Carboxylgruppe bzw. eine ihrer Carboxylgruppen esterförmig mit einem Partialester aus Monocarbonsäuren mit wenigstens 10 C-Atomen – im folgenden mit B bezeichnet – und Polyolen mit 3 bis 6 C-Atomen und wenigstens 3 OH-Gruppen – im folgenden mit C bezeichnet – verbunden. In der hier geschilderten ersten Klasse der erfindungsgemäss verwendeten Dispergierhilfsmittel setzt sich damit der Mischester insgesamt zusammen aus der Hydroxycarbonsäure A, der Monocarbonsäure B und dem Polyol C. Im einzelnen gelten zu diesen die Partialester bildenden Komponenten B und C folgende Angabe:

Die Monocarbonsäuren (B) weisen im allgemeinen 10 bis 24 C-Atome auf, der besonders bevorzugte Bereich liegt bei 12 bis 18 C-Atomen. Die Säuren sind vorzugsweise geradkettig oder verzweigt und können sowohl gesättigt als auch olefinisch ungesättigt sein. Liegen ungesättigte Säuren vor, so sind einfach ungesättigte Säuren bevorzugt, mehrfach ungesättigte Säuren – beispielsweise solche mit 2 oder auch mit 3 olefinischen Doppelbindungen – sind allerdings nicht ausgeschlossen. Typischer Vertreter für Säuren der hier betroffenen Art stammen aus der Klasse der Fettsäuren. Es ist dabei auch möglich, dass diese Monocarbonsäuren gemäss B – vorzugsweise einfach – hydroxyliert sind.

Diese Monocarbonsäuren bilden in der hier geschilderten ersten Klasse der Dispersionshilfsmittel Partialester mit Polyolen mit 3 bis 6 C-Atomen und wenigstens 3 OH-Gruppen – dem Bestandteil C. Diese Polyole können ihrerseits geradkettig oder verzweigt sein. Beispiele für geradkettige Polyole sind Glycerin, Pentosen oder Hexosen, beispielsweise Sorbit oder Mannit, wobei jedoch dem Glycerin hier besondere Bedeutung zukommt. Beispiele für verzweigte Polyole dieser Art sind Pentaerythrit oder Trimethylolpropan. Besondere Bedeutung kommt hier dem Pentaerythrit im Rahmen der erfindungsgemässen Lehre zu.

In den Partialestern B + C liegt üblicherweise das Mischungsverhältnis von B zu C im Bereich von (1 bis 3):1.

Bevorzugt ist der Bereich von (1 bis 2):1 und insbesondere das äquimolare Mischungsverhältnis von 1:1.

Das Molverhältnis der Hydroxycarbonsäure (A) zum Partialester (B + C) liegt bevorzugt im Bereich von 2:1 bis 1:1, wobei auch hier insbesondere Molverhältnisse im Bereich von etwa 1:1 bevorzugt sind. In der besonders bevorzugten Ausführungsform der Erfindung liegen damit die Komponenten A:B + C im Bereich von etwa 1:1 bis 2:1 vor.

Freie Hydroxylgruppen, beispielsweise aus der Komponente A, können mit kurzkettigen Carbonsäuren, beispielsweise solchen mit 1 bis 3 C-Atomen, verestert sein. Freie Carboxylgruppen können als solche vorliegen, sie können aber auch in Form ihrer wasserlöslichen Salze insbesondere entsprechender Alkali- oder Erdalkalisalze vorgesehen sein.

In der zweiten Ausführungsform der Erfindung werden Misch- bzw. Komplexester gemäss (b) aus den zuvor geschilderten Hydroxycarbonsäuren A und solchen Estern verwendet, die durch Umsetzung von Monocarbonsäuren gemäss B mit Hydroxycarbonsäuren mit bis zu 6 C-Atomen gebildet worden sind. Auch für diesen Hydroxycarbonsäure-Bestandteil des Mischesters gelten die zuvor zu A gemachten allgemeinen und bestimmten Angaben. In dieser zweiten Ausführungsform der Erfindung liegen damit im Regelfall zusammen mit einem Anteil der Monocarbonsäure B zwei Anteile von Hydroxycarbonsäuren gemäss A vor. Diese Hydroxycarbonsäurebestandteile können sich dabei von gleichen oder auch verschiedenen Hydroxycarbonsäuren ableiten, jedoch gelten für beide Bestandteile die zu A gemachten Angaben. Sinngemäss gilt auch hier, dass freie Hydroxylgruppen gegebenenfalls mit niederen Carbonsäuren mit 1 bis 3 C-Atomen verestert sein können und dass eventuell vorliegende freie Carboxylgruppen auch zu wasserlöslichen Salzen umgewandelt sein können. Hier und im Fall der Mischester der ersten Klasse wird der Einsatz dieser Dispergierhilfsmittel bei pH-Werten von 4 bis 10, insbesondere 6 bis 8, bevorzugt.

Emulgatoren der hier geschilderten Art sind wenigstens teilweise bekannt, sie werden unter anderem als Backhilfsmittel eingesetzt. Ihre Herstellung ist für Komplexester aus Fettsäure, Glycerin und Fruchtsäuren beispielsweise in der DE-PS 1 278 423 und den DE-OS 2 732 210, 2 734 059 beschrieben. Dass ihre Anwendung auf dem Gebiet der Polymerisation von Vinylchlorid insbesondere nach dem Suspensionsverfahren zu besonders vorteilhaften Verfahrensprodukten führt, war jedoch nicht vorherzusehen.

Die erfindungsgemäss eingesetzten anionischen und nichtionischen Komplexester werden üblicherweise in Mengen von 0,005 bis 0,5 Gew.-%, insbesondere von 0,01 bis 0,3 Gew.-% bezogen auf das zu polymerisierende Monomere, eingesetzt. Dabei werden die hier geschilderten Misch- bzw. Komplexester üblicherweise in Kombination mit herkömmlichen Schutzkolloiden verwendet. Schutzkolloide im Sinne der Erfindung, sind insbesondere Polyvinylalkohole, die von der Herstellung her noch wechselnde Mengen an Acetylgruppen enthalten können. Verbesserungen im Verfahrensprodukt werden jedoch auch beobachtet, wenn man als Schutzkolloide Cellulosederivate verwendet.

Als monomerlösliche Katalysatoren lassen sich bei dem in dem Rahmen der Erfindung fallenden Verfahren zur Polymerisation von Vinylchlorid einsetzen:

Peroxide, wie Benzoylperoxid, 2,4-Dichlorbenzoylperoxid, Lauroylperoxid, Azoverbindungen, wie Azoisobuttersäuredinitril, Azo-bis-dimethylvalerodinitril oder Perester, wie tert. Butylperpivalat und zwar in Mengen von 0,01 bis 0,3 Teilen, bezogen auf 100 Teile Monomeres. Die zuvor genannten herkömmlichen Schutzkolloide können in Mengen von 0,01 bis 0,5 Gew.-%, bezogen auf das zu polymerisierende Monomere, Verwendung finden. Weitere mögliche empfehlenswerte Zusätze bei der Durchführung der Polymerisation sind Puffersubstanzen, z.B. Phosphate, deren Menge so bemessen sein sollte, dass der pH-Wert der wässrigen Phase zwischen 4 und 10, vorzugsweise zwischen 6 und 8, liegt.

Zweckmässigerweise werden die Komplexester und ggf. die Puffersubstanzen vor Beginn der Polymerisation zugesetzt. Man kann jedoch auch so vorgehen, dass man die Polymerisation normal startet und das Dispergierhilfsmittel nach einer bestimmten Reaktionszeit ganz oder nach und nach in das Reaktionsgefäss einbringt. Die Polymerisation kann bei üblichen Temperaturen zwischen 30 und 75 °C, vorzugsweise zwischen 40 und 70 °C, durchgeführt werden.

Der Einsatz von bis zu 20 Gew.-% an Comonomeren zur Herstellung von Mischpolymerisaten ist möglich. Als Comonomere zur Herstellung von Mischpolymerisaten kommen Äthylen, Propylen, Vinylacetat, Vinylidenchlorid, Vinyläther, Acrylnitril oder Acrylester in Betracht.

Erfindungsgemäss geeignete Komplex- bzw. Mischester der zuvor beschriebenen ersten Gruppe sind beispielsweise die folgenden Verbindungen: Mono-oleyl-glycerid-lactat, Mono-rizinoleoylglycerid-lactat, Mono-palmitoyl-glycerid-lactat, Mono-isopalmitoyl-glycerid-lactat, Mono-stearoyl-glycerid-lactat, Mono-isostearoyl-glycerid-lactat, Mono-hydroxy-stearoyl-glycerid-lactat, die den vorgenannten Verbindungen entsprechenden analogen Mischester, in denen das Glycerin durch Pentaerythrit oder durch Sorbit ersetzt ist, die den vorgenannten Verbindungen entsprechenden homologen Komponenten, in denen der Lactatrest durch den Citratrest, den Malatrest oder den Tartrat- bzw. den Diacetyltartratrest ersetzt, ist. Bei den Glycerin und auch Pentaerythrit enthaltenden Partialestern können neben oder anstelle der Monopartialester auch Dipartialester vorliegen.

Beispiele für Dispergierhilfsmittel der zuvor geschilderten zweiten Klasse sind die folgenden: Oleoyl-lactoyl-lactat, Ricinoleoyl-lactoyl-lactat, Palmitoyl-lactoyl-lactat, Isopalmitoyl-lactoyl-lactat, Stearoyl-lactoyl-lactat, Hydroxystearoyl-lactoyl-lactat, Isostearoyl-lactoyl-lactat, die den vorgenannten Verbindungen entsprechenden analogen Mischester, in denen die Monocarbonsäure gemäss B mit Zitronensäure, Äpfelsäure oder Weinsäure verestert ist, die den vorgenannten Verbindungen entsprechenden homologen Komponenten, in denen der Lactatrest durch den Citratrest, Malatrest oder den Tartratrest ersetzt ist.

Beispiele

800 g entsalztes Wasser, 500 g Vinylchlorid, 0,125 g Natriumhydrogencarbonat, 2,5 g Lauroylperoxid und ein in der folgenden Tabelle genauer aufgeführtes Gemisch aus Schutzkolloid und Dispergierhilfsmittel wurden in einem V2A-Rührautoklaven unter kräftigem Rühren auf 55 °C aufgeheizt. Nach 7 bis 8 Stunden fiel der Druck im Autoklaven auf ca. 4,6 bar. Die Polymerisation wurde dann beendet und Polyvinylchlorid aus der Suspension abgenutscht, mit Wasser und Methanol gewaschen und im Vakuum bei 50 °C getrocknet.

In den anliegenden Tabellen sind die Eigenschaften der erhaltenen Polymerisate aufgeführt. Die Eigenschaften werden verglichen mit den Eigenschaften eines PVC's, das ohne Hilfsdispergatorzusatz hergestellt wurde und mit einem PVC, das als Dispergierhilfsmittel Sorbitanmonooleat als relativen Stand der Technik enthielt.

Tabelle I

| Beispiel | Schutzkolloid | Konzentration (%) bezogen auf Monomer | Dispergierhilfsmittel | Konzentration (%) bezogen auf Monomer |
|---|---|---|---|---|
| 1 (Vergleich) | PVAL[1] | 0,3 | – | – |
| 2 (Vergleich) | PVAL | 0,3 | Sorbitanmonooleat | 0,1 |
| 3 | PVAL | 0,3 | Monostearoylglyceridcitrat | 0,1 |
| 4 | PVAL | 0,3 | Na-stearoyl-lactoyllactat | 0,01 |
| 5 (Vergleich) | PVAL | 0,1 | – | – |
| 6 (Vergleich) | PVAL | 0,1 | Sorbitanmonooleat | 0,01 |
| 7 | PVAL | 0,1 | Na-stearoyl-lactoyllactat | 0,01 |
| 8 | PVAL | 0,1 | Ca-stearoyl-lactoyllactat | 0,01 |

[1] verwendet wurde ein handelsüblicher teilverseifter Polyvinylalkohol mit einer Viskosität (4%ige wässrige Lösung bei 20° C zwischen 30 und 60 mPa·s.

Tabelle II

| Beispiel | Weichmacheraufnahme nach DIN 53417, Teil 1, in g DOP/100 g PVC | Schüttgewicht nach DIN 53468 | Belag (%) | Wärmestabilität* nach DIN 53418 (180°C), in min |
|---|---|---|---|---|
| 1 (Vergleich) | 19,3 | 550 | <3 | 60 |
| 2 (Vergleich) | 20,6 | 529 | <3 | 80 |
| 3 | 23,1 | 527 | <3 | 100 |
| 4 | 23 | 526 | <3 | 80 |
| 5 (Vergleich) | 16,2 | 556 | gering | 60 |
| 6 (Vergleich) | 16,4 | 586 | 0 | 80 |
| 7 | 18 | 524 | 0 | 80 |
| 8 | 21,3 | 515 | 0 | 80 |

\* Rezeptur: 100 Gew.-Teile PVC
1,5 Gew.-Teile zinnorgan. Stabilisator
(Irgastab 17 MOK, Fa. Ciba Geigy)

Tabelle III

| Beispiel | Siebanalyse (%) 0,8 mm | 0,4 mm | 0,2 mm | 0,1 mm | 0,05 mm | Korngrössenverteilung (%)* |
|---|---|---|---|---|---|---|
| 1 (Vergleich) | 0,4 | 59,6 | 24,6 | 9,9 | 5,3 | 34,5 |
| 2 (Vergleich) | 0 | 4,4 | 60,4 | 22,5 | 12,8 | 82,9 |
| 3 | 0,5 | 2,7 | 85,8 | 9,7 | 0,4 | 95,5 |
| 4 | 0,4 | 3,9 | 51,9 | 40,0 | 4,4 | 91,9 |
| 5 (Vergleich) | 0 | 1,8 | 38,7 | 49,9 | 9,0 | 88,6 |
| 6 (Vergleich) | 0 | 3,0 | 49,7 | 41,0 | 6,2 | 90,7 |
| 7 | 0,3 | 1,2 | 69,0 | 28,5 | 1,0 | 97,5 |
| 8 | 0,3 | 0,9 | 66,2 | 32,1 | 0,5 | 98,3 |

\* Anteil der PVC-Körner mit $0,4 < d \leq 0,1$ mm

## Patentansprüche

1. Verwendung von Mischestern aus (A) Hydroxycarbonsäuren mit bis zu 6 C-Atomen und
a) Partialestern aus (B) gesättigten oder olefinisch ungesättigten Monocarbonsäuren mit 10 bis 24 C-Atomen, die auch mit einer Hydroxylgruppe substituiert sein können, und (C) Polyolen mit 3 bis 6 C-Atomen und wenigstens 3 OH-Gruppen oder
b) Estern aus (B) gesättigten oder olefinisch ungesättigten Monocarbonsäuren mit 10 bis 24 C-Atomen, die auch mit einer Hydroxylgruppe substituiert sein können, mit (A) Hydroxycarbonsäuren mit bis zu 6 C-Atomen
und – soweit diese Mischester freie Carboxylgruppen aufweisen – gegebenenfalls deren wasserlöslichen Salzen als Dispergierhilfsmittel für die Polymerisation von Vinylchlorid.

2. Ausführungsform nach Anspruch 1, dadurch gekennzeichnet, dass man Mischester von Hydroxycarbonsäuren mit 3 bis 6 C-Atomen verwendet, die vorzugsweise 1 bis 3 Carboxylgruppen und 1 oder mehrere Hydroxylgruppen aufweisen.

3. Ausführungsform nach Ansprüchen 1 und 2, dadurch gekennzeichnet, dass man Mischester verwendet, die Reste von geradkettigen oder verzweigten Monocarbonsäuren mit vorzugsweise 12 bis 18 C-Atomen enthalten.

4. Ausführungsform nach Ansprüchen 1 bis 3, dadurch gekennzeichnet, dass man Mischester verwendet, die auf 1 Mol-Teil Hydroxycarbonsäure 0,5 bis 1 Mol-Teile vorzugsweise etwa 1 Mol-Teil, des Partialesters gemäss Anspruch 1 a) bzw. des Esters gemäss Anspruch 1 b) enthalten.

5. Ausführungsform nach Ansprüchen 1 bis 4, dadurch gekennzeichnet, dass man Mischester gemäss Anspruch 1 b) verwendet, die im Molekül gleiche oder verschiedene Reste von Hydroxycarbonsäuren mit bis zu 6 C-Atomen aufweisen.

6. Ausführungsform nach Ansprüchen 1 bis 5, dadurch gekennzeichnet, dass man die Mischester bei pH-Werten von 4 bis 10, insbesondere 6 bis 8, gegebenenfalls in Form ihrer wasserlöslichen Salze verwendet.

7. Ausführungsform nach Ansprüchen 1 bis 6, dadurch gekennzeichnet, dass man die Mischester zusammen mit üblichen Schutzkolloiden für die Suspensionspolymerisation von Vinylchlorid, insbesondere zusammen mit Polyvinylalkoholen oder Celluloseäthern, verwendet.

## Claims

1. The use of mixed esters of (A) hydroxycarboxylic acids containing up to 6 C-atoms and

a) partial esters of (B) saturated or olefinically unsaturated $C_{10}$–$C_{24}$ monocarboxylic acids, which may even be substituted by a hydroxyl group, and (C) polyols containing from 3 to 6 C-atoms and at least 3 OH-groups or

b) esters of (B) saturated or olefinically unsaturated $C_{10}$–$C_{24}$ monocarboxylic acids, which may even be substituted by a hydroxyl group, with (A) hydroxycarboxylic acids containing up to 6 C-atoms

and, where these mixed esters contain free carboxyl groups, optionally water-soluble salts thereof as dispersion aids for the polymerization of vinyl chloride.

2. The use claimed in Claim 1, characterized in that mixed esters of $C_3$–$C_6$ hydroxycarboxylic acids preferably containing from 1 to 3 carboxyl groups and 1 or more hydroxyl groups are used.

3. The use claimed in Claims 1 and 2, characterized in that mixed esters containing residues of linear or branched monocarboxylic acids preferably containing from 12 to 18 C-atoms are used.

4. The use claimed in Claims 1 to 3, characterized in that mixed esters containing from 0.5 to 1 moles and preferably about 1 mole of the partial ester according to Claim 1a) or of the ester according to Claim 1b) to 1 mole of hydroxycarboxylic acid are used.

5. The use claimed in Claims 1 to 4, characterized in that mixed esters according to Claim 1b) containing the same or different residues of hydroxycarboxylic acids with up to 6 C-atoms in the molecule are used.

6. The use claimed in Claims 1 to 5, characterized in that the mixed esters are used at pH-values of from 4 to 10 and more particularly at pH-values of from 6 to 8, optionally in the form of their water-soluble salts.

7. The use claimed in Claims 1 to 6, characterized in that the mixed esters are used together with standard protective colloids for the suspension polymerization of vinyl chloride, more especially polyvinyl alcohols or cellulose ethers.

**Revendications**

1. Utilisation d'esters mixtes (A) d'acides hydroxycarboxyliques ayant jusqu'à 6 atomes de carbone et

a) d'esters partiels d'acides monocarboxyliques (B) saturés ou oléfiniquement insaturés ayant 10 à 24 atomes de carbone, lesquels peuvent aussi être substitués par un groupe hydroxyle, et (C) de polyols ayant 3 à 6 atomes de carbone et au moins 3 groupes OH, ou bien

b) d'esters d'acides monocarboxyliques saturés ou oléfiniquement insaturés (B) ayant 10 à 24 atomes de carbone, lesquels peuvent aussi être substitués par un groupe hydroxyle, avec des acides hydroxycarboxyliques (A) ayant jusqu'à 6 atomes de carbone

et – pour autant que ces esters mixtes présentent des groupes carboxyle libres – éventuellement de leurs sels solubles dans l'eau, en tant qu'auxiliaires de dispersion pour la polymérisation du chlorure de vinyle.

2. Forme de réalisation selon la revendication 1, caractérisée en ce qu'on utilise des esters mixtes d'acides hydroxycarboxyliques ayant 3 à 6 atomes de carbone qui présentent de préférence 1 à 3 groupes carboxyle et 1 ou plusieurs groupes hydroxyle.

3. Forme de réalisation selon les revendications 1 et 2, caractérisée en ce qu'on utilise des esters mixtes qui contiennent des radicaux d'acides monocarboxyliques à chaîne droite ou ramifiée ayant de préférence 12 à 18 atomes de carbone.

4. Forme de réalisation selon les revendications 1 à 3, caractérisée en ce qu'on utilise des esters mixtes qui contiennent pour 1 partie molaire d'acide hydroxycarboxylique 0,5 à 1 partie molaire et de préférence environ 1 partie molaire de l'ester partiel selon la revendication 1a) ou de l'ester selon la revendication 1b).

5. Forme de réalisation selon les revendications 1 à 4, caractérisée en ce qu'on utilise des esters mixtes selon la revendication 1b) qui présentent dans la molécule des radicaux identiques ou différents d'acides hydroxycarboxyliques ayant jusqu'à 6 atomes de carbone.

6. Forme de réalisation selon les revendications 1 à 5, caractérisée en ce qu'on utilise les esters mixtes à des valeurs de pH de 4 à 10, en particulier de 6 à 8, éventuellement sous forme de leurs sels solubles dans l'eau.

7. Forme de réalisation selon les revendications 1 à 6, caractérisée en ce qu'on utilise les esters mixtes en même temps que des colloïdes protecteurs usuels pour la polymérisation en suspension du chlorure de vinyle, en particulier en même temps que des alcools polyvinyliques ou des éthers de cellulose.